# EUROPÄISCHE PATENTSCHRIFT

(11) **EP 2 825 484 B1**
(45) Veröffentlichungstag und Bekanntmachung des Hinweises auf die Patenterteilung: **05.10.2016**
(21) Anmeldenummer: 13709173.2
(22) Anmeldetag: 05.03.2013
(51) Int. Cl.: B65D 85/00, B65D 88/16, B65B 1/04

(54) **VERPACKUNGSBEHÄLTER**
PACKAGING CONTAINER
CONTENANT D'EMBALLAGE

(30) Priorität: 13.03.2012 AT 3052012
(43) Veröffentlichungstag der Anmeldung: 21.01.2015
(73) Patentinhaber: Pörner Ingenieurgesellschaft mbH, 1050 Wien (AT)
(72) Erfinder: PÖRNER, Andreas, 2380 Perchtoldsdorf (AT)
(74) Vertreter: Patentanwälte Puchberger, Berger und Partner
(86) Internationale Anmeldenummer: PCT/EP2013/054315
(87) Internationale Veröffentlichungsnummer: WO 2013/135520

(56) Entgegenhaltungen:
- EP-A1- 0 474 931
- WO-A1-2007/111399
- AT-A1- 505 805
- AT-U1- 9 644
- CA-A1- 2 352 013
- DE-A1- 1 761 637
- DE-A1- 4 402 576
- DE-A1-102010 004 755

## Beschreibung

Die Erfindung betrifft großvolumige Verpackungsbehälter für thermoplastische Stoffe, insbesondere Bitumen, wobei der Behälter eine Bodentafel und einen mit diesem verbundenen Behältermantel aus Wandtafeln aus flexiblem Material, insbesondere aus Flachgewebe oder Rundgewebe aus Kunstfasern wie Polypropylen (PP) oder Polyethylen (PE) oder aus biologisch abbaubaren Naturfasern und gegebenfalls mit einer Innenbeschichtung aus PP oder PE versehen ist, aufweist.

Großvolumige Verpackungsbehälter der oben genannten Art sind seit langer Zeit zum Transport großer Mengen schüttfähiger oder fließfähiger Güter in Verwendung und sind auch unter dem Schlagwort "big bag" bekannt. Die Behälter müssen kostengünstig in der Herstellung, den Anwendungszwecken entsprechend tragfähig und verschleißfest und in der Handhabung beim Befüllen, beim Transport und beim Entleeren zweckdienlich sein. Die Herstellung muss auch in großen Stückzahlen wirtschaftlich sein, wobei möglichst geringe Näharbeit erforderlich und die Herstellung auch mit einfachen Mitteln z.B. in Entwicklungsländern möglich sein soll. Dennoch muss die dimensionsmäßige Präzision auch in der Serie gewährleistbar sein. Überdies ist es gewünscht, aus einer größeren Auswahl an Geweben wählen zu können wie z.B. aus Kunststoff, aber auch aus biologisch abbaubaren Naturmaterialien wie Jute, Flachs, etc.

Es ist bereits bekannt geworden, z.B. durch die AT 505 805 B1, derartige Verpackungsbehälter zum Verpacken eines thermoplastischen Stoffes, nämlich von Bitumen zu verwenden. Thermoplastische Stoffe und insbesondere Bitumen sind als Füllgut schwierig zu behandeln, da es sich dabei um eine erstarrende und erstarrte Flüssigkeit handelt, die auch in festem Zustand ein gewisses Kriechverhalten zeigt. Dies führt in nachteiliger Weise zu einem seitlichen Ausbauchen des Mantels der Transportbehälter, wodurch sich die äußere Form dimensionsmäßig derart verändert, dass die Handhabung erschwert wird. Dies gilt insbesondere dann, wenn eine Mehrzahl befüllter Transportbehälter in Ladeflächen oder in Container eingelagert werden sollen, wo lediglich beschränktes Platzangebot vorhanden ist. Die Dimensionsveränderungen der befüllten Säcke können dazu führen, dass die gefüllten Behälter nicht ohne Beschädigung verladen werden können, sich beim Transport gegeneinander verkeilen und die Entnahme sehr erschwert wird.

Das Lager- und Transportproblem von Bitumen wurde früher und wird auch derzeit noch durch die Anwendung steifer Behälter gelöst wie z.B. die Bitumenfässer aus Stahlblech. Diese sind jedoch sehr teuer, haben geringes Füllvolumen und sind umwelttechnisch problematisch, da nach der Verwendung mit Bitumen kontaminierter Schrott anfällt.

Hinsichtlich der Verwendung von Verpackungsbehältern aus flexiblem Material ist es in der Praxis schon früher bekannt geworden, in die Behälter Versteifungs- oder Verstärkungselemente einzunähen wie z.B. horizontale Bänder im unteren Drittel der Behälterhöhe oder gemäß AT 505 805 B1 Stabilisierungsmittel in Form genähter Falten, die in die die Seitenwandungen bildenden Gewebetafeln eingenäht sind. Allerdings ist das Anbringen zusätzlicher Nähte in Geweben immer mit Problemen verbunden wie z.B. die Schwächung des genähten Materials und zusätzlich sind alle diese Maßnahmen mit zusätzlichem Material- und Nähaufwand verbunden.

Weitere gattungsgemäße Verpackungsbehälter für thermoplastische Stoffe sind aus den Druckschriften DE 1 761 637 A1, WO 2007/111399 A1, sowie DE 44 02 576 A1 bekannt.

Aufgabe der vorliegenden Erfindung ist es, bei Beibehaltung der oben angeführten Anforderungen die seitliche Ausbauchung der Behälter im unteren Teil der Bauhöhe der Behälter zu minimieren. Weiters soll die Standfestigkeit des gefüllten Behälters gewährleistet und weiters auch das befüllbare Behältervolumen bei vorgegebenen Ladedimensionen und Bedingungen optimiert werden.

Erfindungsgemäß ist der gattungsbildende großvolumige Verpackungsbehälter durch die Merkmale des Anspruchs 1 definiert. Der Behältermantel in der bodennahen unteren Hälfte der Bauhöhe des Behälters tailliert ist.

Bevorzugt ist die maximale Taillierung in der Zone der maximalen Umfangsspannung des Mantels nach Befüllung des Behälters mit dem thermoplastischen Stoff angeordnet. Die Zone der maximalen Umfangsspannung und die Taille liegt günstigerweise im Bereich 5% der Bauhöhe des Behälters unterhalb bis 10% der Bauhöhe des Behälters oberhalb der Umfangslinie der maximalen Umfangsspannung. Die Seitenkanten sind ausgehend von den bodenseitigen Ecken in einem ersten Abschnitt vertikal oder nur schwach nach innen geneigt nach oben gerichtet ausgebildet und in einem zweiten Abschnitt bogenförmig zu einer Krümmungswendelinie geführt , wobei diese Linie im Bereich des Übergangs der horizontalen Umfangslinie von annähernd rechteckig auf annähernd rund liegt. Weiter bevorzugt kann der Behälter dadurch gekennzeichnet sein, dass die Krümmungswendelinie vom Boden aus gemessen zwischen 10% und 20% der Bauhöhe des Behälters liegt. Der Behälter kann vorteilhaft oberhalb der Zone der maximalen Umfangsspannung eine Umfangslinie der minimalen Taillierung aufweisen, die im Bereich der halben Bauhöhe des leeren Behälters liegt, bevorzugt zwischen 45% und 70% der Bauhöhe. In einer Alternative kann der Behälter dadurch gekennzeichnet sein, dass der Behältermantel aus zusammengenähten, die Seitenwandtafeln bildenden, Gewebezuschnitten gebildet ist, wobei die Taillierung des Mantels durch entsprechende Nählinien bestimmt ist . Bevorzugt ist im Behälter ein das thermoplastische Material aufnehmender Innensack aus Kunststofffolie mit einem Schmelzpunkt oberhalb der Einfülltemperatur des thermoplastischen Materials vorgesehen. Jeweils zwei der Seitenkanten können mit einer Hebeschlaufe verbunden sein und die Seitenkanten können mit Kantgurten verstärkt sein.

Nachstehend wird die Erfindung anhand der Zeichnungen beispielsweise näher beschrieben. Dabei beziehen sich die Ausführungen beispielsweise auf einen Transportbehälter aus Kunststoffgewebe, insbesondere aus Polyethylen (PE) oder Polypropylen (PP), wobei die Grammatur üblicherweise zwischen den 80g/m² bis 300g/m² und bevorzugt bei 160g/m² liegt. Die Grammatur ist selbstverständlich den jeweiligen Verhältnissen hinsichtlich Beladungsgewicht, Behältergröße und mechanischen Verschleißbedingungen anzupassen. Es können auch verschiedene Grammaturen für verschiedene Teile des Transportbehälters zur Anwendung kommen.

Bitumen z.B. für den Straßenbau wird in heißem Zustand in Abfüllstationen beispielsweise bei etwa 95°-120°C in die Transportbehälter abgefüllt. Daher muss jedes für den Behälter verwendete Gewebe die notwendige thermische Festigkeit haben. Bekannte derartige Gewebe weisen z.B. bei etwa 100°C ein Streckvermögen zwischen etwa 10-20% in Kette und Schuss auf. Wenn in vorteilhafter Weise das Bitumen nicht direkt in den Transportbehälter, sondern in einen in diesem Behälter eingelegten Innenbehälter aus Kunststofffolie eingefüllt wird, dann hat dieser in typischer Weise einen Erweichungspunkt von etwa 100°-125°C, sodass das Bitumen eingefüllt wird, ohne dass es zu einem Schmelzen des Innenbehälters kommt. Der Schmelzpunkt liegt typischerweise erst bei 124° bis über 138°C. Beim Entnehmen des Bitumens mittels Aufschmelzen ist es möglich, diesen dünnen Innenbehälter mit entsprechender Temperatur mitzuschmelzen und mitzuverarbeiten.
Fig. 1 zeigt den Gewebezuschnitt für einen erfindungsgemäßen Transportbehälter mit eingezeichneter Lage verschiedener Bestimmungsmerkmale.
Fig. 2 zeigt die Seitenansicht eines mit dem thermoplastischen Stoff gefüllten Sackes und Fig. 3 einen Schnitt nach der Linie III-III in Fig. 2.

Es ist das besondere Merkmal der vorliegenden Erfindung, dass lediglich durch die besondere Anordnung der die Kanten des Behälters bildenden Nählinien die vorteilhafte Wirkung hervorgerufen wird, wie später im Detail erläutert wird.

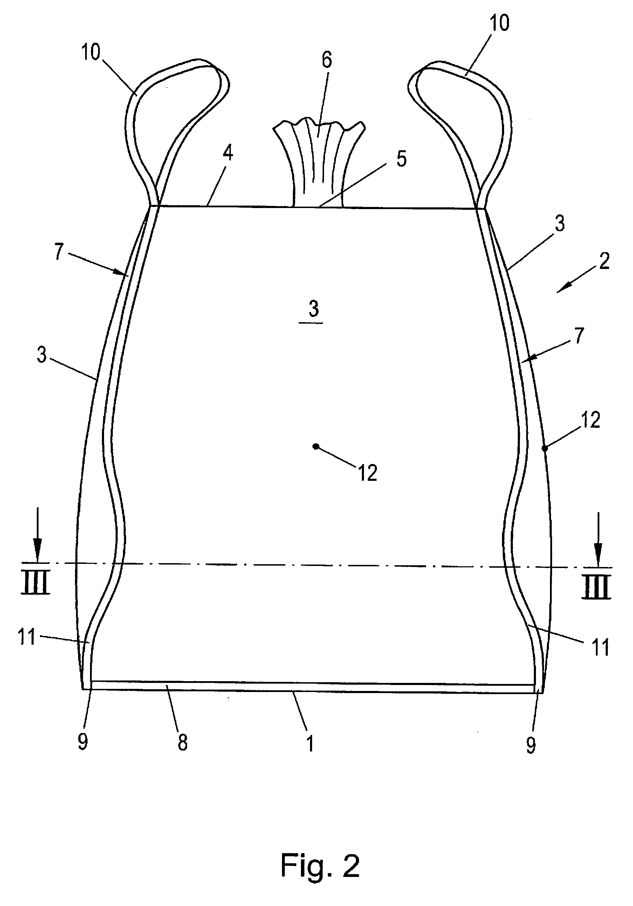

In Fig. 2 ist ein fertiger befüllter Sack in Seitenansicht dargestellt. Er umfasst in bekannter Weise eine aus Gewebe stehende Bodentafel 1 und nach oben aufragend den Behältermantel 2, der aus vier Wandtafeln 3 gebildet ist. Oben kann der Behälter durch einen Behälterdeckel 4 mit einer Einfüllöffnung 5 abgeschlossen sein. Von dem in den Behälter lose oder mit Fixierungen eingehängten Innensack 6 ist lediglich der nach oben herausstehende und verschließbare Einfüllstutzen zu sehen.

Die einzelnen Wandtafeln sind zur Bildung des Behältermantels an den Seitenkanten 7 miteinander vernäht und in ähnlicher Weise ist die Bodentafel 1 mit den Wandtafeln 3 unter Bildung der Bodenkante 8 vernäht. An den vier Ecken 9 stoßen jeweils die Bodenkanten und die Seitenkanten aneinander.

Zum Halten und Transportieren des Verpackungsbehälters sind jeweils von den Seitenkanten 7 ausgehend nach oben erstreckte Hebeschlaufen 10 vorgesehen, wobei sich jede der beiden Hebeschlaufen zwischen zwei benachbarten Seitenkanten 7 erstreckt. Die Hebeschlaufen sind bevorzugt durch durchgehend angeordnete Kantgurte 11 gebildet, sodass sich die Belastungsaufnahme beim Heben auf das gesamte Gewebe bis zur Bodentafel verteilt.

Wie auch der Fig. 2 zu entnehmen ist, ist der Behältermantel in jener Zone tailliert, in der das Bitumen die größte Spannung im Behältermantel ausübt. Durch diese Taillierung wird in überraschender Weise die Ausdehnung des Gewebes unter der Einwirkung von Hitze und Innendruck derart ausgeglichen, dass der Behälter im Wesentlichen seine aufrechte Form beibehält. Wie man in Fig. 2 erkennen kann, liegt der Mittelpunkt 12 jeder Wandtafel 3 bei größter Ausdehnung etwa senkrecht über der zugehörigen Bodenkante 8.

Weiters ist in Fig. 2 noch zu erkennen, dass unterhalb der Taillierung die Ecken 9 des Behälters prall gefüllt hervorstehen und wie Füße den Sack stabilisieren.

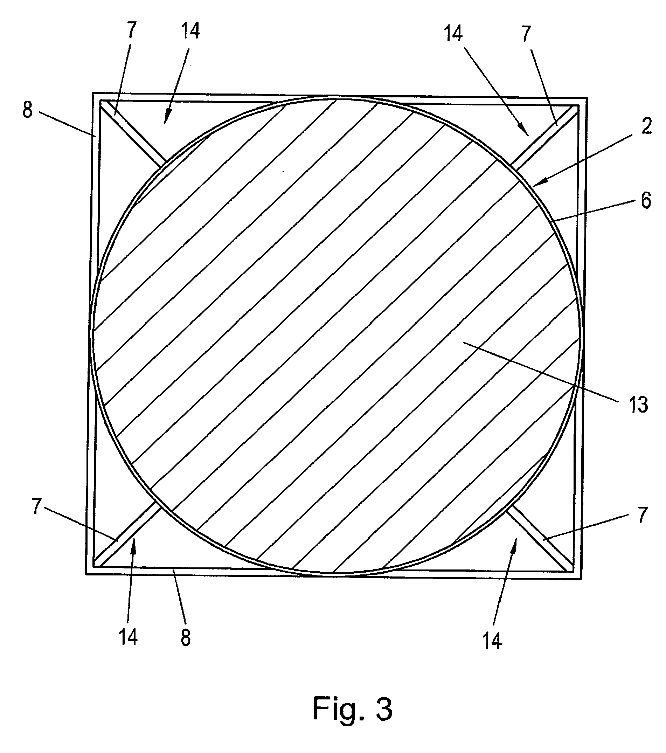

Dies ist besonders gut ersichtlich aus der Fig. 3, die einen Schnitt durch den gefüllten Transportbehälter nach der Linie III-III darstellt. Innen schraffiert ist das thermoplastische Material wie Bitumen mit dem Bezugszeichen 13 bezeichnet. Der das Material aufnehmende Innensack 6 liegt festgepresst am Behältermantel 2 an. Der in umgefülltem Zustand rechteckige Behälter ist in der horizontalen Schnittebene durch den Innendruck im Wesentlichen rund aufgefüllt, wobei aber der Mantel zur rechteckigen Bodentafel 1 hin in die rechteckige Form übergeht, wodurch vier fußähnliche Stützgebilde 14 gebildet sind.

Dies alles stellt sicher, dass der Transportbehälter nach dem Befüllen mit dem thermoplastischen Material nicht seitlich auszuwandern beginnt, seine Form verliert und letztendlich samt Inhalt unbrauchbar wird.

Es ist verständlich, dass die Darstellung in Fig. 3 eine Darstellung des Idealzustandes ist, der aber in der Praxis so weit erreichbar ist, dass die gewünschten Vorteile in überraschenderweise gewährleistet sind.

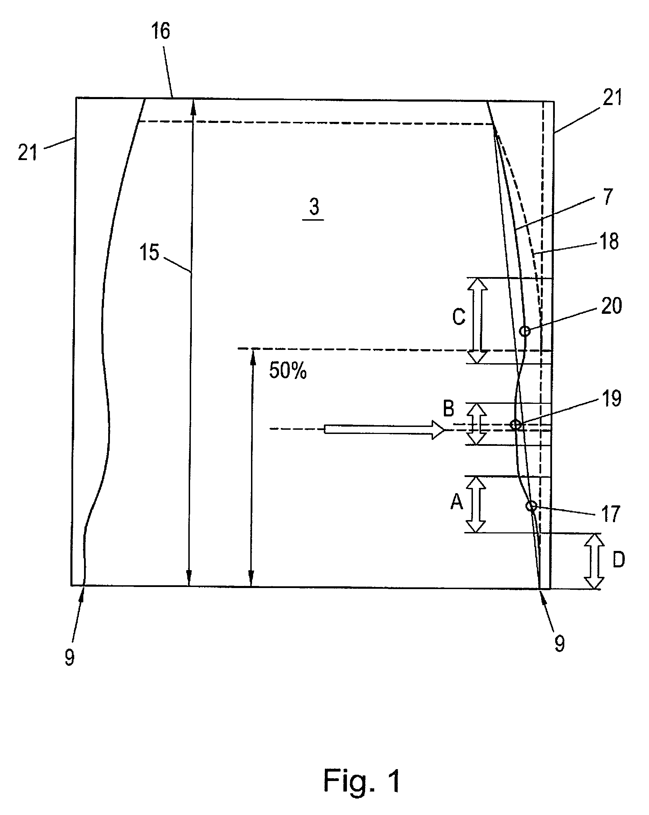

Zurückkehrend zu Fig. 1 wird im folgenden die Nählinie besprochen, durch deren besondere Anordnung die gewünschten Vorteile erzielt werden.

Nachstehende Maß- oder Prozentangaben beziehen sich auf die Bauhöhe 15 des Behälters, die sich von der Bodenkante 8 bis zur Deckelkante 16 erstreckt. Die jeweils ganz außen links und rechts eingezeichneten Begrenzungslinien 21 stellen beispielsweise die Begrenzungskanten eines Gewebezuschnittes dar, wie er vor dem Vernähen vorliegen kann.

Die Nählinie bildet den Verlauf der Seitenkante 7 und verläuft wie im folgenden beschrieben ist.

Ausgehend von den bodenseitigen Ecken 9 erstrecken sich die Seitenkanten 7 in einem ersten Abschnitt D vertikal oder nur schwach nach innen geneigt, bis die Nählinie im zweiten Abschnitt A bogenförmig zu einer Krümmungswendelinie 17 geführt ist. Diese Krümmungswendelinie 17, die an der in Fig. 1 dargestellten Nählinie nur als Punkt eingezeichnet ist, erstreckt sich horizontal um den gesamten Mantel und diese Linie zeigt den Übergang der horizontalen Umfangslinie des Mantels in gefülltem Zustand von annähernd rechteckig auf annähernd rund. Bevorzugt liegt diese Krümmungswendelinie vom Boden aus gemessen zwischen 10% und 20% der Bauhöhe 15 des Behälters.

Im dritten Abschnitt B liegt die maximale Taillierung des Mantels, wobei es sich bei dieser Zone um jene der maximalen Umfangsspannung des Mantels nach Befüllung des Behälters mit dem thermoplastischen Stoff handelt. Es ist dies jene Zone, in der abhängig vom Sackmaterial und Füllgewicht der Behälter durch den Innendruck des eingefüllten Materials die größten Dehnungen erfährt. Die Taillierung ist so ausgeführt, dass bei maximaler Dehnung die Füllkontur 18 nicht oder nur geringfügig überschritten wird, wobei auch die thermische Dehnung oder Schrumpfung von Behältermaterial und Füllgut berücksichtigt werden kann.

Die Zone der maximalen Umfangsspannung und damit die Zone der Taille liegt bevorzugt im Bereich 5% der Bauhöhe des Behälters unterhalb und 10% der Bauhöhe des Behälters oberhalb der Umfangslinie 19 der maximalen Umfangsspannung.

Oberhalb des dritten Abschnittes B liegt der vierte Abschnitt C, der um die Umfangslinie 20 die minimale Taillierung aufweist und damit wieder mehr Füllvolumen im Behälter zulässt. Diese Umfangslinie 20 der Zone C liegt etwa im Bereich der halben Bauhöhe des leeren Behälters, bevorzugt zwischen 45% und 70% der Bauhöhe 15.

Großvolumige Verpackungsbehälter mit den hier beschriebenen Merkmalen haben nicht nur den Vorteil der Formstabilität, der Standfestigkeit und der kostengünstigen Herstellung, sondern erlauben auch in überraschender Weise größere Füllvolumina als die bekannten derartigen Verpackungsbehälter, da es durch die hohe Formstabilität möglich ist, die Grundfläche der Verpackungsbehälter, also die Dimensionen der Bodentafel 1 etwas zu vergrößern, ohne dass es zu Problemen beim Transport in Containern, Lastwägen oder dergleichen kommt. Wenn bisherige übliche Füllvolumina beispielsweise bei 900 bis 1.000kg liegen, kann dieses Volumen um beinahe 200kg erhöht werden, was einen erheblichen Kostenvorteil bietet.

Daraus ergibt sich auch ein vorteilhaftes Verfahren zum Befüllen der beschriebenen Verpackungsbehälter mit thermoplastischem Material und insbesondere mit Bitumen. Es war bekannt, die Befüllung der Verpackungsbehälter im Stehen durchzuführen. Es hat sich jedoch in überraschender Weise gezeigt, dass es sowohl zu einer Erhöhung des Füllvolumens als auch zu einer größeren Stabilität des Transportbehälters nach Erkalten führt, wenn die Verpackungsbehälter beim Befüllen an ihren Hebeschlaufen ohne Bodenkontakt aufgehängt werden. Durch das dabei ermöglichte Durchbiegen der Bodentafel ergibt sich ein zusätzliches Füllvolumen, welches beim Abstellen des Behälters im noch warmen Zustand und nach dem Abkühlen auf Umgebungstemperatur den entstehenden Volumensverlust durch Schrumpfung ausgleicht. Dadurch wird das Füllvolumen insgesamt erhöht und der erhöhte Innendruck wirkt sich günstig auf die Formstabilität aus.

Wenn in der Beschreibung lageabhängige Angaben wie oben, unten, horizontal oder vertikal verwendet wurden, beziehen sich diese Angaben auf die normale Gebrauchslage, in der sich die Bodentafel in horizontaler Lage befindet.

Weiters kann es vorteilhaft sein, den Transportbehälter im unteren bodennahen Bereich des Behältermantels mit zusätzlichen Gewebelagen zu verstärken.

### Bezugszeichenliste

1. Bodentafel
2. Behältermantel
3. Wandtafeln
4. Behälterdeckel
5. Einfüllöffnung
6. Innensack
7. Leitenkanten
8. Bodenkante
9. Ecken
10. Hebeschlaufen
11. Kantgurt
12. Mittelpunkt
13. Thermoplastisches Material
14. Stützgebilde
15. Bauhöhe
16. Deckelkante
17. Krümmungswendelinie
18. Füllkontur
19. Umfangslinie maximale Umfangsspannung
20. Umfangslinie
21. Begrenzungslinien

A. Zweiter Abschnitt
B. Dritter Abschnitt
C. Vierter Abschnitt
D. Erster Abschnitt

## Patentansprüche

1. Großvolumiger Verpackungsbehälter für thermoplastische Stoffe, insbesondere Bitumen, wobei der Behälter eine Bodentafel (1) und einen mit diesem verbundenen Behältermantel (2) aus Wandtafeln (3) aus flexiblem Material, insbesondere aus Flachgewebe oder Rundgewebe aus Kunstfasern wie Polypropylen (PP) oder Polyethylen (PE) oder aus biologisch abbaubaren Naturfasern und bevorzugt mit einer Innenbeschichtung aus PP oder PE aufweist, wobei die Wandtafeln (3) zur Bildung der Behältermantels (2) an Seitenkanten (7) miteinander vernäht sind, und die Bodentafel (1) mit den Wandtafeln (3) unter Bildung einer Bodenkante (8) vernäht ist, wobei an vier bodenseitigen Ecken (9) des Verpackungsbehälters die Bodenkanten und die Seitenkanten aneinander stoßen,
**dadurch gekennzeichnet, dass**
der Behältermantel (2) in der bodennahen unteren Hälfte der Bauhöhe (15) des Behälters tailliert ist, wobei die Seitenkanten ausgehend von den bodenseitigen Ecken (9) in einem ersten Abschnitt (D) vertikal oder nur schwach nach innen geneigt nach oben gerichtet ausgebildet und in einem zweiten Abschnitt (A) bogenförmig zu einer Krümmungswendelinie (17) geführt sind, wobei diese Linie im Bereich des Übergangs einer horizontalen Umfangslinie von annähernd rechteckig auf annähernd rund liegt.

2. Behälter nach Anspruch 1, **dadurch gekennzeichnet, dass** die maximale Taillierung in der Zone der maximalen Umfangsspannung (B) des Behältermantels (2) nach Befüllung des Behälters mit dem thermoplastischen Stoff (13) angeordnet ist.

3. Behälter nach Anspruch 2, **dadurch gekennzeichnet, dass** die Zone der maximalen Umfangsspannung (B) und die Taille im Bereich 5% der Bauhöhe (15) des Behälters unterhalb bis 10% der Bauhöhe des Behälters oberhalb der Umfangslinie (19) der maximalen Umfangsspannung angeordnet ist.

4. Behälter nach einem der Ansprüche 1 bis 3, **dadurch gekennzeichnet, dass** die Krümmungswendelinie (17) vom Boden aus gemessen zwischen 10% und 20% der Bauhöhe (15) des Behälters liegt.

5. Behälter nach einem der Ansprüche 1 bis 4, **dadurch gekennzeichnet, dass** der Behälter oberhalb der Zone (B) der maximalen Umfangsspannung eine Umfangslinie (20) der minimalen Taillierung aufweist, die im Bereich der haben Bauhöhe (15) des leeren Behälters liegt, bevorzugt zwischen 45% und 70% der Bauhöhe.

6. Behälter nach Anspruch 5, **dadurch gekennzeichnet, dass** der Behältermantel (2) aus zusammengenähten, die Seitenwandtafeln (3) bildenden, Gewebezuschnitten gebildet ist, wobei die Taillierung des Behältermantels (2) durch entsprechende Nählinien bestimmt ist.

7. Behälter nach einem der Ansprüche 1 bis 6, **dadurch gekennzeichnet, dass** im Behälter ein das thermoplastische Material (13) aufnehmender Innensack (6) aus Kunststofffolie mit einem Erweichungspunkt etwas oberhalb der Einfülltemperatur des thermoplastischen Materials vorgesehen ist.

8. Behälter nach einem der Ansprüche 1 bis 7, **dadurch gekennzeichnet, dass** jeweils zwei der Seitenkanten (7) mit einer Hebeschlaufe (10) verbunden sind.

9. Behälter nach einem der Ansprüche 1 bis 8, **dadurch gekennzeichnet, dass** die Seitenkanten (7) mit Kantgurten (11) verstärkt sind.

10. Behälter nach einem der Ansprüche 1 bis 9, **dadurch gekennzeichnet, dass** der Behältermantel (2) in der bodennahen unteren Hälfte mit zusätzlichen Gewebelagen verstärkt ist.

## Claims

1. A large-volume packaging container for thermoplastic materials, particularly bitumen, wherein the container features a bottom panel (1) and a container jacket (2) connected to the bottom panel, wherein the container jacket is composed of wall panels (3) consisting of flexible material, particularly of flat woven fabric or circular woven fabric, which is made of synthetic fibers such as polypropylene (PP) or polyethylene (PE) or of biologically degradable natural fibers and preferably provided with an inner coating of PP or PE, wherein the wall panels (3) are sewn together on lateral edges (7) in order to form the container jacket (2) and the bottom panel (1) is sewn to the wall panels (3) such that a bottom edge (8) is formed, and wherein the bottom edges and the lateral edges abut on one another on the four bottom corners (9) of the packaging container,
**characterized in that**
the container jacket (2) is constricted in the lower half of the height (15) of the container near the bottom, wherein the lateral edges are starting from the bottom corners (9) directed upward vertically or with only a slight inward inclination in a first section (D) and extend in an arc-shaped fashion to a curvature inflection line (17) in a second section (A), wherein this line lies in the region of the transition of a horizontal circumferential line from approximately rectangular to approximately round.

2. The container according to claim 1, **characterized in that** the maximum constriction is arranged in the zone of maximum circumferential stress (B) of the container jacket (2) after the container has been filled with thermoplastic material (13).

3. The container according to claim 2, **characterized in that** the zone of maximum circumferential stress (B) and the constriction are arranged in the region between 5 % of the height (15) of the container below and 10 % of the height of the container above the circumferential line (19) of maximum circumferential stress.

4. The container according to one of claims 1 to 3, **characterized in that** the curvature inflection line (17) lies between 10 % and 20 % of the height (15) of the container measured from the bottom.

5. The container according to one of claims 1 to 4, **characterized in that** the container features a circumferential line (20) of minimal constriction above the zone (B) of maximum circumferential stress, wherein this circumferential line of minimal constriction lies in the region of half the height (15) of the empty container, preferably between 45 % and 70 % of its height.

6. The container according to claim 5, **characterized in that** the container jacket (2) is composed of woven fabric cutouts that are sewn together and form the sidewall panels (3), wherein the constriction of the container jacket (2) is defined by corresponding sewing lines.

7. The container according to one of claims 1 to 6, **characterized in that** an inner bag (6) for receiving the thermoplastic material (13) is provided in the container and consists of a plastic film with a softening point slightly above the filling temperature of the thermoplastic material.

8. The container according to one of claims 1 to 7, **characterized in that** two of the lateral edges (7) are respectively connected to a lifting loop (10).

9. The container according to one of claims 1 to 8, **characterized in that** the lateral edges (7) are reinforced with edge straps (11).

10. The container according to one of claims 1 to 9, **characterized in that** the container jacket (2) is reinforced with additional woven fabric layers in the lower half near the bottom.

## Revendications

1. Conteneur d'emballage pour gros volumes destiné à des matières thermoplastiques, notamment des bitumes, le conteneur comportant une plaque de fond (1) et une enveloppe de conteneur (2) en plaques de paroi (3) en matière souple, notamment en textile plat ou en textile rond en fibres synthétiques comme un polypropylène (PP) ou un polyéthylène (PE) ou en fibres naturelles biodégradables et de préférence avec un revêtement interne en un PP ou un PE, reliée avec celle-ci, pour former l'enveloppe de conteneur (2), les plaques de paroi (3) étant cousues ensemble sur des arêtes latérales (7) et la plaque de fond (1) étant cousue avec les plaques de paroi (3) en formant une arête de fond (8), les arêtes de fond et les arêtes latérales étant adjacentes sur quatre angles (9) du côté du fond du conteneur d'emballage,
**caractérisé en ce que**
l'enveloppe de conteneur (2) est taillée dans la moitié inférieure proche du fond de l'encombrement en hauteur du conteneur (15), en partant des angles (9) du côté du fond, dans une première partie (D), les arêtes latérales étant conçues en étant dirigées vers le haut, à la verticale ou en inclinaison seulement légère vers l'intérieur et da ns une deuxième partie (A) étant guidées en forme d'arc vers une ligne de renversement (17) de courbure, dans la région du passage d'une ligne périphérique horizontale, ladite ligne étant placée d'une manière approximativement rectangulaire à approximativement ronde.

2. Conteneur selon la revendication 1, **caractérisé en ce qu'**après le remplissage du conteneur avec la matière thermoplastique (13), le taillage maximal est placé dans la zone de la tension périphérique (B) maximale de l'enveloppe de conteneur (2).

3. Conteneur selon la revendication 2, **caractérisé en ce que** la zone de la tension périphérique maximale (B) et la taille est placée dans l'ordre de 5 % de la hauteur d'encombrement (15) du conteneur en dessous, jusqu'à 10 % de la hauteur d'encombrement du conteneur au-dessus de la ligne périphérique (19) de la tension périphérique maximale.

4. Conteneur selon l'une quelconque des revendications 1 à 3, **caractérisé en ce que**, mesurée à partir du fond, la ligne de renversement (17) de la courbure se situe entre 10 % et 20 % de la hauteur d'encombrement (15) du conteneur.

5. Conteneur selon l'une quelconque des revendications 1 à 4, **caractérisé en ce qu'**au-dessus de la zone (B) de la tension périphérique maximale, le conteneur comporte une ligne périphérique (20) du taillage minimal qui se situe dans la région de la demi hauteur d'encombrement (15) du conteneur vide, de préférence entre 45 % et 70 % de la hauteur d'encombrement.

6. Conteneur selon la revendication 5, **caractérisé en ce que** l'enveloppe de conteneur (2) est formée de coupons de textile cousus ensemble, formant les plaques (3) de parois latérales, le taillage de l'enveloppe de conteneur (2) étant défini par des lignes de couture correspondantes.

7. Conteneur selon l'une quelconque des revendications 1 à 6, **caractérisé en ce que** dans le conteneur est prévu un sac intérieur (6) recevant la matière (13) thermoplastique, en film de matière plastique, avec un point de ramollissement légèrement supérieur à la température de remplissage de la matière thermoplastique.

8. Conteneur selon l'une quelconque des revendications 1 à 7, **caractérisé en ce que** chaque fois deux des arêtes latérales (7) sont reliées avec une boucle de levage (10).

9. Conteneur selon l'une quelconque des revendications 1 à 8, **caractérisé en ce que** les arêtes latérales (7) sont renforcées de sangles (11) d'arête.

10. Conteneur selon l'une quelconque des revendications 1 à 9, **caractérisé en ce que** dans la moitié inférieure proche du fond, l'enveloppe de conteneur (2) est renforcée de couches de textile supplémentaires.
